# EUROPEAN PATENT APPLICATION

(11) **EP 4 628 478 A1**
(43) Date of publication of application: **08.10.2025**
(21) Application number: 25168224.1
(22) Date of filing: 03.04.2025
(51) Int. Cl.: C04B 41/45, C04B 41/00, C04B 41/70, C04B 41/71, C04B 28/02, C04B 20/10, E04C 2/06, C04B 41/52, C04B 111/82, C04B 111/00, C04B 111/80

(54) **METHOD OF MANUFACTURING A CEMENTITIOUS PRODUCT AND COATED CEMENTITIOUS PRODUCT**

(30) Priority: 03.04.2024 EP 24168304; 03.04.2024 EP 24168253
(71) Applicant: Etex Services NV, 1880 Kapelle-op-den-Bos (BE)
(72) Inventor: LEEMANS, Raymond, 1860 Meise (BE)
(74) Representative: Etex Services NV - Etex IPSC

(57) **Abstract**

The method of manufacturing a cementitious product comprises the steps of: (1) providing an aqueous slurry comprising cement; (2) manufacturing a green sheet having a first surface using said aqueous slurry, wherein said green sheet having a predetermined color and being provided with a shading layer comprising a particulate inorganic material at its first surface, and (3) curing said green sheet. The particulate inorganic material may for instance have an average diameter of 35-85 µm, and suitably comprises a calcium silicate material, such as xonotllite. After application of the particulate inorganic material, it may be pressed into the surface of the green sheet.

## Description

### FIELD OF THE INVENTION

The invention relates to a method of manufacturing a cementitious product comprising the steps of:
- providing an aqueous slurry comprising cement;
- manufacturing a green sheet having a first surface using said aqueous slurry,
- colouring the first surface of said green sheet by applying an aqueous coating composition as a dispersion comprising a particulate inorganic material, and
- Curing said green sheet.

The invention further relates to a coated cementitious product comprising a cement sheet.

### BACKGROUND OF THE INVENTION

Such a process is described in the non-prepublished application 22198530.2 in the name of applicant. The particulate inorganic material is specifically a calcium silicate material which is or comprises xonotlite. More specifically, composite xonotlite particles are used for the coating of the green sheet, which composite xonotlite particles are composed of an inner porous structure and an external layer forming a crystalline skin. Both the inner porous structure and the external layer predominantly comprise xonotlite, although the presence of other calcium silicate hydrates such as tobermorite is not excluded. As described in said application, the calcium silicate material may replace titanium oxide and be used together with other colorants to provide a predefined color for the cementitious product. This cementitious product is more specifically a fiber cement product, such as a corrugated sheet.

It has now been found that such an aqueous coating composition that preferably comprises xonotlite may be applied to a first surface of a green cement sheet can be advantageously used to replace decorative fibers that otherwise should be added into the green sheet, i.e. as additives in the aqueous slurry, such as for instance disclosed in WO2019/115615A1. This use allows a cost-effective solution with increased fire resistance due to a reduction in the amount of organic fiber material. This use is moreover versatile.

### SUMMARY OF THE INVENTION

According to a first aspect, the invention provides a method of manufacturing a fiber cement product comprising the steps of: (1) providing an aqueous slurry comprising cement and fibers; (2) manufacturing a green sheet having a first surface using said aqueous slurry; (3) applying an aqueous dispersion comprising a particulate inorganic material to the first surface of the green sheet and/or applying an aqueous dispersion comprising a particulate inorganic material to a cementitious layer during manufacturing of the green sheet, wherein a surface of said cementitious layer will constitute the first surface of the resulting green sheet; (4) performing a pressing step, wherein at least part of the particulate inorganic material is at least partially pressed into the green sheet, and (5) curing said green sheet. Herein the particulate material is applied to obtain merely partial coverage of the first surface of the green sheet.

According to a further aspect, the invention provides a coated fiber cement product comprising a cement sheet of predefined color and a shading layer of particulate inorganic material at a first surface of said cement sheet, which shading layer merely provides partial coverage of the first surface of the green sheet, and wherein at least part of the particulate inorganic material is at least partially pressed into the first surface, wherein said cement sheet and said shading layer are co-cured.

In the context of the present invention, the result obtained by applying said aqueous dispersion of particulate inorganic material and/or fibrous material is referred to as a shading layer. It has been found in investigations leading to the present invention, that the shading layer comprising particulate inorganic material provides a contrast with the underlying cement sheet, and further may soften the color of the underlying cement sheet. As a shading layer, the cement sheet remains visible. For instance, in one preferred embodiment, not the entire first surface, but rather discrete individual portions thereof, is covered with the particulate inorganic material. This especially is visible from a distance as dots or the like, which resemble partly visible fibres within the cement sheet, such as pigmented fibres or certain fibrils, also known as synthetic wood pulp. In addition to providing contrast, the application of the particulate inorganic material may lead to providing a tone or tint to the underlying material. Particularly, the typically dark or darker color of a cementitious product may be softened by means of the shading layer.

It further has turned out in supplementary investigations that the application of the shading layer is before curing of the green cement. When particulate inorganic material and/or fibrous material is added as a filler into an organic coating applied after curing, the shading effect with dots, lines, curvedline or similar cannot be reached. The particulate inorganic material then simply will cover the underlying cement sheet as an ordinary coating. Furthermore, the addition of the particulate inorganic material and/or fibrous material in the green phase allows using particles that have a larger size than a thickness of a typical coating layer.

According to the invention, the method comprises applying an aqueous dispersion of said particulate inorganic material to a cementitious layer or surface during manufacture of the green sheet, which application of the aqueous dispersion is followed by a pressing step, wherein at least part of the particulate inorganic material is at least partially pressed into the green sheet. As a consequence, said particles constitute part of the surface of the green sheet, and are therefore not just present on the first surface of the green sheet, but rather at or even in the first surface of the green sheet. The pressing step may be performed separately or could be achieved by means of processing steps conventional to the manufacture of fiber cement products. Such processing steps are for instance pressing during arrangement of the green sheet on an accumulator roll and pressing as part of a compression step of typically 15MPa to 30MPa, preferably 20MPa to 28MPa to increase the density of the cement sheet.

According to one specific embodiment, the aqueous dispersion is applied onto a first cementitious layer transported on an endless belt towards an accumulator roll. In this manner the aqueous dispersion will get into contact with an outer surface of the accumulator roll. Subsequently, further cementitious layers will then be deposited onto this first layer. After deposition of a sufficient number of cementitious layers, a green sheet will be ready and may be removed from the accumulator roll. The shading layer will be present at the first surface of the green sheet. While it is deemed sufficient and preferred that the aqueous dispersion is applied onto the first cementitious layer only, it is not excluded that an aqueous dispersion is also applied on more layers.

As will be understood by those skilled in the art, manufacturing a green sheet while using an endless belt and an accumulator roll is common to manufacturing processes as the Hatschek process and the flow-on process. These manufacturing processes are especially in use for manufacture of fiber cement products. The addition of fibers to the aqueous slurry for fiber cement provides a reinforcement and allows adequate processing of the slurry in equipment needed for the Hatschek process or the flow-on process. Fiber cement products have the advantage of being stable, sufficiently strong, and dimensionally stable. Therefore, these products are used for exterior coverage, such as roofing and façade. Particularly for use in façades, the decorative quality of the fiber cement product is a very important criterion.

In one preferred implementation, the method further comprises a dewatering step, following the application of the aqueous dispersion. Due to the particulate structure of the dispersion, dewatering may be performed easily. For instance, water may flow away through a belt on which the green sheet or layers therefore lies and/or is transported, and/or sidewise. Furthermore, underpressure may be applied to a bottom side of such belt or other porous band for active dewatering. A drying step may be performed after the dewatering step, in known manner, by increasing the temperature, by application of heat from a heat source such as an infrared lamp, and/or by bringing the green sheet in a drying chamber with reduced humidity level and/or increased temperature in comparison to atmospheric conditions.

The particulate inorganic material is preferably a material with a white or whitish color, such as titanium oxide, calcium carbonate, silica, diatomaceous earth, alumina, calcium silicate, vermiculite, magnesium silicate such as talc, aluminium silicates such as mica, barium sulfate, calcium sulfate such as gypsum. Preferred are crystalline materials. Combination of such materials could also be used.

A preferred example of a particulate inorganic material is calcium silicate. Several crystalline forms of calcium silicate exist, depending on the ratio between calcium and silicon, as well as the amount of crystal water (hydrates), such as tobermorite, xonotlite, wollastonite. Hydrous calcium silicates may be prepared synthetically, allowing that properties are constant. These hydrous calcium silicates are known to give good brightness and comparatively low oil absorption. They are known as filler (or extender pigment) in paints, such as aqueous based paints known as latex. Additionally, these calcium silicate materials are highly compatible with cement, which also includes forms of calcium silicates as the effective bonding species in the cement. This high compatibility facilitates recycling. It further enables that the particles may get bonded to the cement. The latter implies that the incorporation of the particles at or in the surface will not be detrimental for the properties of the product, such as bending strength, water absorption, crack resistance and the like. Alternative silicate based materials, such as perlite and phyllosilicate materials, such as for instance vermiculite, are not excluded, and may be provided in available forms, such as exfoliated vermiculite and expanded perlite.

A preferred form of calcium silicate is xonotlite, which is a crystalline form with formula Ca₆Si₆O₁₇(OH)₂, or more generically Ca(SiO3).xH2O. This material is commercially available and has a mean particle size in a range that is large enough for creating visual contrast, especially 10 µm or more. An even more preferred form hereof is a synthetic version hereof that comprises an inner porous structure in addition to a crystalline skin. Such a material is commercially available from Promat International under the trade name Promaxon^{®}. While referring here to xonotlite, it is not excluded that xonotlite particles may comprise other calcium silicate forms in addition to xonotlite. The xonotlite with an inner porous structure has been found to have good optical properties, such that it could be used as a pigment like TiO2. In fact, crystalline xonotlite is needle shaped. Xonotlite particles comprise such needles, at least in their inner porous structure. When applying xonotlite particles, it is not excluded that at least part thereof will break open during the preparation of the aqueous dispersion thereof, and/or during processing of the aqueous dispersion into the shading layer.

With the term "crystalline skin" it is described that the external layer is predominantly composed of crystals. Predominantly is herein at least 80% by weight, preferably at least 90% by weight or even at least 95% by weight or at least 97% by weight, at least 98% by weight, at least 99% by weight. As the skin is composed of individual crystals, pores may be present in between of the crystals. Preferably the crystals may be needle-shaped or plate-shaped, and the crystals may be entangled defining said pores. According to a preferred implementation, the crystals of the crystalline skin have an average size smaller than the crystals in in the inner porous structure. Furthermore, the pores in the crystalline skin may have an average size smaller than the inner pores.

The use of xonotlite for its fire-resistant properties as described e.g., in US4612344 and WO99/46215. Promaxon^{®}, is a commercial form of synthetic xonotlite particles. Herein, crystals of xonotlite are provided as agglomerates in a spherical substance with a mean diameter between 40 and 150 microns and with an internal part and an external layer. The crystals are loosely entangled in the internal part, whereas the crystals are more tightly entangled in the external layer. It is commercialized as a friction extender in brakepads and linings, and as a thixotropic agent in paints and coatings, as a parting agent for granulates, in dry liquid systems, flame retardant and drip suppressant in thermoplastics.

In a preferred embodiment, the synthetic xonotlite having an inner porous structure and an external layer in the form of a crystalline skin has an average particle size in the range of 5 to 100 µm, such as from 10 to 50 µm. Although the synthetic xonotlite particles are typically bigger than 5 µm, it is not excluded that the particles get broken and or that a size reduction treatment is performed upon generation of the aqueous dispersion. However, it is deemed an advantage of the aqueous dispersion that the minimum size is not too small, so as to facilitate effective removal of water after the application thereof.

In one embodiment, the particles in the aqueous coating composition preferably have an average size comprised between 35 and 85 µm. Upon processing, the composite particles may well break down into smaller fragments. The core-shell structure of the inner porous structure and the external layer may therewith no longer be recognizable in the final shading layer. However, the individual crystals, typically needle-shaped and often mutually entangled and/or intermingled, remains.

In a further embodiment, the calcium silicate particles of the shading layer may have a bimodal distribution. This is deemed beneficial so as to create a double visual effect: the larger particles may well form visible dots, whereas the smaller particles contribute to a haze. The first peak (mean size) of the bimodal distribution is for instance in the range of 5µm to 25 µm, the second peak of the bimodal distribution is for instance in the range of 40 µm to 100 µm. A bimodal distribution may for instance be achieved by means of an ultrasonic treatment of a lime source used for generation of the hydrated calcium silicates. The bimodal distribution may alternatively be achieved by selective crushing of the xonotlite particles, or alternatively by combining different sources of particulate inorganic material.

In again a further embodiment, pigment of different color than white may be added into the shading layer to obtain a desired coloring. Preferably, red and / or yellow pigments or dyes are used. Pigments are herein particularly preferred as these have known alkaline resistance needed to withstand the pH of fiber cement. In earlier experiments it was found that the combination of calcium silicate material, and especially synthetic xonotlite with pigment in a mutual mass ratio of 5:1 and 20:1, such as between 7:1 and 15:1 led to a uniform coloring. The pigment used therein were for instance yellow and red in desired mutual ratios to obtain a predefined color.

Notwithstanding a preference for white or whitish inorganic material, it is not excluded that the particulate inorganic material is chosen to have a different color, such as black, brown, red or beige. Materials hereof are known per se. Examples of black particulate inorganic materials are for instance black iron oxide and carbon black. The addition of black particulate inorganic material in the shading layer is for instance deemed advantageous in case that the cement sheet is white or light-colored.

In a further embodiment, the fibrous material comprises at least one of pigmented fibers and fibrils. In combination with the use of particulate inorganic material, the use of such fibrous additives has been found to enhance the illusory effect, that pigmented fibers would be present in the mass of the cement sheet. In other words, this enhances the effect of the particulate inorganic material. Use is fine fibrous material, such as with a diameter of at most 80 µm, more preferably at most 50 µm is preferred. Such fine fibrous material, which is preferably fibrillated material, for instance has an average length in between of 0.2 mm and 1.2 mm, as defined by sieving. The fraction larger than 1.2 mm is preferably less than 10% by weight, and the fraction smaller than 0.2 mm is preferably at most 40% by weight, or even at most 30% by weight. The fibers are preferably organic fibers and more preferably polyolefin fibers.

In one further and important embodiment, the aqueous dispersion as used in the method of the invention further comprises a hydrophobation agent. Preferred hydrophobation agents are based on alkyl- and alkoxy-silane technology and known per se in the art. The hydrophobation agent may be monomeric, oligomeric or polymeric in nature. Specific examples are for instance provided in Eur. Coatings. J. 3/2015, pp. 102-105. A hydrophobation agent is a known additive to fiber cement, either as an additive within the aqueous slurry from which the green sheet is formed, or as an additive applied onto a fiber cement product after curing. Hydrophobation is for instance applied to reduce inflow of water, and therewith reduce occurrence of efflorescence. The addition of a hydrophobation agent to the aqueous dispersion is deemed an efficient manner to achieve a uniform application thereof. Moreover, it is furthermore feasible to apply the aqueous dispersion, and hence the hydrophobation agent, also to side edges.

In one embodiment, the aqueous dispersion, as well as the resulting shading layer furthermore comprises a binder, which is preferably present in an amount of less than 25 wt.%, preferably less than 15 wt.%, more preferably less than 5 wt.%, more preferably between 0 and 2 wt.% based on the total weight of particles in the dispersion. The binder can comprise mineral and / or polymer binders. The binder preferably comprises not more than 40 wt.% of polymer binder over the total weight of binders (polymer + mineral), preferably not more than 25 wt.%, more preferably not more than 10 wt.%. In an embodiment, the binder comprises no polymer. It is herein observed for sake of clarity that the composite particles of as used in the invention and/or preferred embodiments thereof, are not considered as a binder.

In an alternative embodiment, the aqueous dispersion comprises no binder. The absence of a polymer binder is preferably, so as to withstand autoclave curing. Additionally, the absence of a binder provides more freedom in application of the aqueous dispersion, as there is no risk of contamination of process water used for the manufacture of the green sheet. However, in case that the aqueous dispersion is applied after manufacture of the green sheet, such risk of contamination is reduced and/or may be arranged to be absent. It is herein observed for sake of clarity that the composite particles of as used in the invention and/or preferred embodiments thereof, are not considered as a binder. The presence of a polymer binder may further be beneficial in case that printing of a pattern on top of the cementitious product is desired. Such top coating and/or printed pattern, for instance by inkjet printing, are preferably applied after the curing step. Suitable polymer binders will be aqueous binders, such as acrylate binders. Such a binder is well-known and typically based on emulsion polymerisation. Polymer binders may further include ethylenically unsaturated double bonds, so as to achieve curing.

The aqueous dispersion may be applied in various concentrations, in dependence of the desired effect as well as the location of application (i.e. during manufacture of the green sheet or thereafter). Initial experiments were performed by spraying on the green sheet after its manufacture at a low concentration, i.e. less than 0.5% by weight. As a consequence, the spraying was performed more than once. It is however not excluded to increase the concentration of the aqueous dispersion. A preferred concentration is in the range of 0.1% to 10%, such as from 0.2% to 7% by weight of the dispersion. More concentrated dispersions are not excluded.

In a further embodiment of the method of the invention, the green sheet is compressed after application of the aqueous dispersion, and preferably after dewatering and/or drying of the green sheet with the shading layer. Compressing of cementitious products, such as fiber cement products, is known per se, and may be achieved by applying a pressure that is for instance in the range of 15 to 30 MPa, for instance 20 to 30 MPa. It results in a product with a higher density and improved properties, such as enhanced strength and reduced water absorption. The compression step will lead to further dewatering of the shading layer and the cement sheet. Compressed fiber cement products are highly suitable for façade applications.

The curing step in the method of the invention may be any type of curing, such as air-curing step, autoclave-curing step and carbonation curing step (i.e. with CO2). Conditions for these curing steps are known per se to the skilled person in the art. Furthermore, as known, the curing step may be preceded by any pre-curing treatment, which is for instance a curing step at atmospheric conditions during 6-12 hours at a temperature of 20-80 °C, for instance 40-70 °C.

In again a further embodiment, the method further comprises the step of coating the cement sheet after curing. Typically, an organic coating system on a fiber cement sheet comprises a primer layer, and one or more coating layers. Coating techniques are known per se. The primer may for instance be a dried layer. A top coating is preferably curable thermally and/or by UV-radiation. Coatings configured for use in fiber cement products are for instance known from EP2036871A1, EP3307696A1, EP1914215, EP2764031.

Preferably, the cement sheet is coated with at least one translucent or transparent coating. A translucent coating is a coating comprising conventional opaque pigment having a pigment concentration of up to 6% pigment volume concentration (PVC), preferably up to 3% PVC. As a consequence of the low pigment concentration, the resulting coating provides a haze by being colored to a desired extent, but light able to pass through the coating. A transparent coating is a coating without opaque pigment. Transparent fillers may be present. The transparent coating may furthermore comprise a nanoscale pigment, as known per se and also referred to as transparent pigment and having a particle size in the range of up to 40 nm, and especially at most 20 nm. Such transparent pigments hardly scatter light, but strongly absorb radiation. Nanoscale TiO2 absorbs UV-radiation, transparent iron oxide (Fe2O3) absorbs light, to obtain a specific color, such as red, yellow or braun, while the coating otherwise remains transparent. Transparent coatings may further be UV-curable, which coatings are also referred to as clear coats.

It is observed for sake of clarity and completeness, that any of the above-mentioned embodiments applies to all aspects of the invention (both the method and the product). The same applies to any embodiment specified in the dependent claims or in the following.

### BRIEF DESCRIPTION OF THE FIGURES

For a more complete understanding of the nature of the present invention, reference is made to the following detailed description taken in conjunction with the accompanying drawings in which:
Figures 1(a) to 1(c): show various coating apparatuses for applying a coating onto a main surface of a green sheet according to the present invention.
Figure 2(a): plots the L*, a*, b* values of sheets coated with a xonotlite coating composition compared to TiO2 coated boards as a function of exposure time.
Figure 2(b): plots the L* values of Figure 3(a) at a larger scale.
Figure 3: plots the variations of L*, a*, b* values of sheets coated with a xonotlite coating composition with TiO2 coated boards after 3 months exposure time.
Fig. 4A-4D show a series of pictures of fiber cement boards obtained with the invention
Figure 5: shows a particle size distribution of Promaxon D (= xonotlite particles).
Figure 6(a): shows a schematic representation of a calcium silicate particle according to the present invention cut in half.
Figure 6(b): shows a micrograph of a detail of a calcium silicate particle according to the present invention cut in half.
Figure7: shows xonotlite (X) and tobermorite positions in a tertiary phase diagram CaO - SiO2 - H2O.

### DETAILED DESCRIPTION OF THE INVENTION

The present invention concerns a method for providing a cementitious product, and to a resulting cementitious product. Preferably, the cementitious products are fiber cement products. As known per se to the skilled person, fiber cement products are manufactured in a method comprising a first step of providing an aqueous slurry comprising cement. As a second step, a green sheet is manufactured using said aqueous slurry. Thereafter, the green sheet is cured, typically by autoclave-curing or by air-curing. After the curing, the sheet may be coated, and furthermore may be treated mechanically, for instance to generate holes, cavities and/or edge patterns (such as grooves) for assembly and fastening. Between green sheet manufacturing and curing, treatments may be performed on the green sheet to modify its shape, its surface and/or its properties. A typical shape modification is corrugation to form corrugated sheets. A typical surface modification is embossing or engraving. A typical property modification is a compressing step, for instance with a pressure in the range of 20MPa to 30MPa. This increases the density of the green sheet, which will improve stability in humid atmospheres, as well as mechanical properties. Stability in humid atmospheres is typically tested by means of a dimensional stability test during artificial freezing and thawing test. Water absorption is also measured, for instance by means of a Karsten test. Mechanical properties include the compressive strength, expressed as the SMOR and the elastic modulus. According to the present invention, a surface modification of the green sheet is performed in that a shading layer is applied. Microscopically, the application of the shading layer resides in the application of particulate material of predefined color onto and/or into a surface of the green sheet. It is highly preferred that at least a portion of said particulate material goes into said surface. From a distance, after curing the green sheet, the presence of particulate material in and at the surface of the green sheet has the effect of a shading layer. In order to obtain a shading layer, the application of the particulate material should lead to maximum partial coverage of the surface of the green sheet, rather than becoming an opaque coating through which the color of the underlying fiber cement sheet would no longer be visible. As will be elucidated hereinafter, the shading layer may be implemented in different manners. The shading layer will comprise inorganic particulate material, but may additionally comprise fibrous material, such as organic fibrous material. Furthermore, the surface modification in the form of the shading layer may be applied after manufacture of the green sheet, but alternatively during manufacture of the green sheet.

### Manufacturing a fiber cement green sheet and applying the aqueous dispersion

The manufacture of fiber cement products typically starts from an aqueous slurry comprising cement in addition to fibers. Cement is typically Portland cement, but may alternatively be another type of cement. Fibers may be cellulose fibers, synthetic fibers and inorganic fibers such as basalt fibers or glass fibers. In case of autoclave cured cement products, silica is added so as to achieve a reaction between silica and cement during autoclaving. Therefore, in autoclave cured products, the content of cement is typically 25-50% by weight and the content of silica is typically 25-50% by weight, as based on the total dry weight of the slurry. In case of air-cured fiber cement products, the slurry typically comprises at least 60% and preferably at least 70% by weight of cement, as based on the total dry weight of the slurry. Further additives may be provided to the aqueous slurry, which are known per se to the skilled person. Examples include limestone, chalk, quick lime, slaked or hydrated lime, ground sand, silica sand flour, quartz floor, amorphous silica, condensed silica fume, microsilica, metakaolin, wollastonite, mica, perlite, vermiculite, aluminium trihydroxide (ATH), pigments, antifoaming agent, flocculants and the like. The aqueous slurry may further contain recycled fiber cement material.

The manufacturing of the green sheet from an aqueous slurry may be performed by any method known in the art, such as the Magnani process, a flow-on process, the Hatschek process or a casting process. Flow-on and Hatschek are the preferred manufacturing processes, and Hatschek process is particularly preferred. The manufacturing process of flow-on and Hatschek comprise the steps of (1) the application of an aqueous slurry or films thereof onto an endless belt, (2) the transport of said aqueous slurry or films thereof on the endless belt, while performing at least one dewatering step, therewith forming a - wet - layer, (3) the transfer of said - wet - layer to an accumulator roll, also known as forming drum, resulting in stack of a plurality of layers to form a green sheet, and (4) the removal of the green sheet from the accumulator roll. This removal may occur by cutting through the green sheet on the accumulator roll, such that the green sheet can be unwounded from the accumulator roll in a controlled manner.

In the Hatschek process, the first step of applying the aqueous slurry or films thereof on the belt makes use of rotating sieves going through a vat of the aqueous slurry. Several films are disposed on top of each other on the belt, so as to form a layer. The application step will thus comprise (i) building a fiber cement film on a sieve, which sieve rotates so as to be in contact with a fiber cement slurry in a vat; and (ii) transferring the fiber cement film from the sieve to the felt transport belt. The resulting fiber cement layer is also known as a "Hatschek fiber cement layer" or a "Hatschek layer" as interchangeably used herein refers. Hence, series of thin films are produced on the one or more sieves from the Hatschek machine and subsequently superimposed and transferred from the one or more sieves to the transport belt, resulting in one or more uncured Hatschek fiber cement layers after accumulation on an accumulation roll. A "fiber cement (thin) film" typically has a thickness of between about 0.01 mm and about 0.9 mm, such as in particular between about 0.05 mm and about 0.5 mm, such as between about 0.1 mm and about 0.4 mm, such as about 0.3 mm. (i.e. one thin film of fiber cement also called a mono-layer, that is applied onto the felt transport belt by a sieve from a vat of the Hatschek process). The Hatschek layer comprises two or more superimposed fiber cement films by two or more sieves from a vat of the Hatschek process (i.e. two or more superimposed monolayers of fiber cement applied onto the felt transport belt). The number of superimposed fiber films depends on the particular configuration of the Hatschek section and especially the number of sieves.

In the flow-on process, the first step of applying the aqueous slurry on the belt occurs as such. This results in a thicker fiber cement layer instead of a superimposed series of films.

Due to the unwounding process from the accumulator roll, the bottom side of last fiber cement layer on the belt (which may be the last portion of a continuous layer) will normally form the bottom side of the fiber cement sheet. The top side of the first fiber cement layer on the belt will be arranged adjacent the surface of the accumulator roll and will normally form the top side of the fiber cement sheet. Obviously, top and bottom side of the fiber cement sheet can be reversed.

Preferably, the aqueous dispersion of said particulate material and/or fibrous material is applied through the application of the aqueous dispersion on top of the first fiber cement layer during the transport thereof on the endless belt. For sake of clarity, it is added that the aqueous dispersion may be applied by any suitable process, such as spraying, spattering and brushing. Brushing is deemed most preferred. It is feasible that the aqueous dispersion is applied in in one application step or in more than one application step, such as spraying or spattering the aqueous dispersion twice onto the first layer on the belt, for instance at mutually different locations. The application of the aqueous dispersion in this manner is deemed a most practical solution, as it prevents that a separate drying step is needed after application of the aqueous dispersion. Moreover, in case of application of the particulate material and/or fibrous material onto the previously formed green sheet, any evaporation, particularly during drying, may bring such particulate material and/or fibrous material into the air, where it may circulate as dust, potentially leading to health issues.

In order to ensure that at least a portion of the particulate material resides in the surface, and hence that particulate material is incorporated in an upper fiber cement layer of the fiber cement sheet, a pressing step is performed. Where the aqueous dispersion is applied onto the first fiber cement layer on the belt, such pressing will be performed in the course of wounding and stacking the fiber cement on the accumulator roll. When still needed or desired, a separate pressing step may be performed, for instance by applying a roller over the first surface of the fiber cement sheet, or guiding the fiber cement sheet below a roller pressing on the first surface thereof.

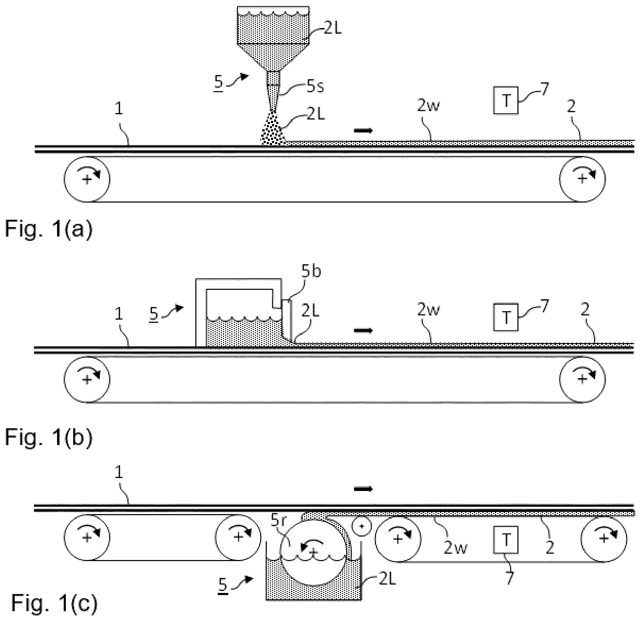

**Figures 1(a) to 1(c)** show three non exhaustive examples of application methods for the aqueous dispersion. As shown in **Figure 1(a)****,** the aqueous coating composition can be sprayed or poured onto a substrate 1, such as the green sheet or onto the first layer thereof. This results in a wet layer (2w), that thereafter is dewatered to form the shading layer (2), preferably involving pressing (not shown). This technique is simple, robust, and reliable.

As shown in **Figure 1(b)****,** the aqueous dispersion can be applied with a doctor blade (5b) which controls the thickness of the wet layer (2w) applied onto the substrate 1. **Figure 1(c)** shows application of the aqueous dispersion by roller coating. The coating techniques illustrated in **Figures 1(b) and 1(c)** are more suitable for application on the manufactured green sheet than on the first layer thereof during manufacture of the green sheet. The aqueous dispersion can also be applied by brush painting, by dipping, or by electrostatic coating.

The aqueous dispersion may be applied (semi-) continuously or intermittently, i.e. in accordance with a predefined application pattern as a function of time, as illustrated in **Figures 1(a) to 1(c)****.** The substrate (1) herein preferably travels on a conveyor. The aqueous dispersion (2L) is stored in a tank (5) with dispensing means for transferring a desired amount of aqueous dispersion (2L) onto the substrate to form a wet layer (2w), as this travels through the dispensing means. As shown in Figures 1(a) to 1(c) and discussed supra, the dispensing means can be a spraying head (5s) or pouring head, or a tank (5) partly opened with a doctor blade (5b), or a roller (5r) partly immersed in the aqueous dispersion (2L). If the aqueous dispersion is applied to the green sheet after its manufacture (and especially after unwounding from the accumulator roll), a setting station (7) may be present downstream of the applicator for setting the wet layer (2w) to form the dry layer (2). The setting station (7) can comprise an oven or dryer to evaporate the water and other volatiles from the wet layer (2w). In case the aqueous dispersion comprises a binder, the setting station (7) can be configured for crosslinking the binder, with a source of light (IR, visible, UV) and the like.

### Calcium silicate particles and the aqueous dispersion (2L) thereof

The aqueous dispersion (2L) comprises at least particles of inorganic material dispersed in an aqueous solution or in water. Preferably, the particles are or are based on calcium silicate, which also included and preferably is hydrous calcium silicate. For instance, at least 50 wt.%, preferably at least 75 wt.% of calcium silicate particles (2p), based on the total weight of particles in the dispersion are calcium silicate particles. The particles of the aqueous dispersion preferably comprise 100 wt.% of the calcium silicate particles, or alternatively less 95 wt.% more preferably less than 90 wt.% based on the total weight of particles in the dispersion.

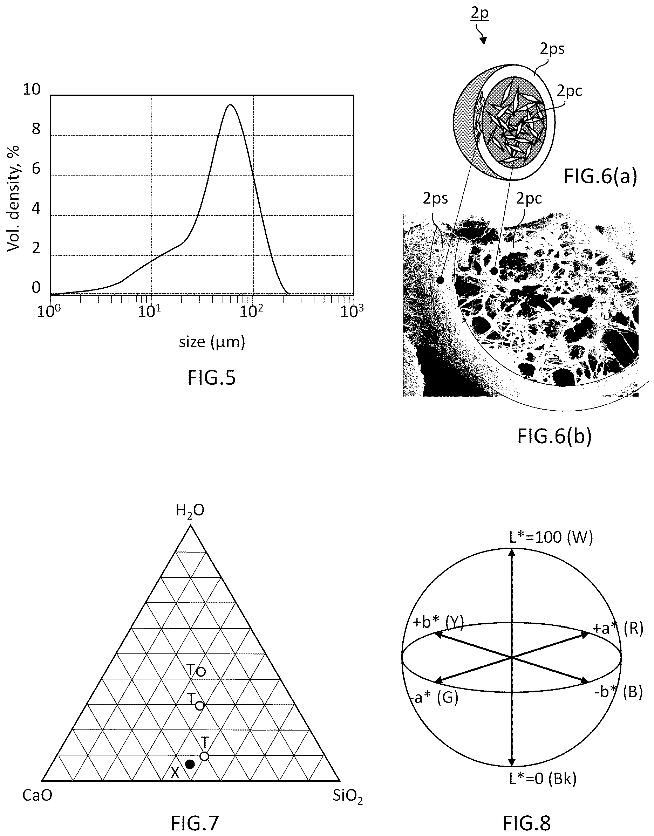

The calcium silicate particles (2p) are in the form of xonotlite, tobermorite, or a mixture thereof. Preferably, **Figure 7** shows a tertiary diagram of CaO - SiO2 - H2O showing the approximate positions of xonotlite (= black circle labelled X) and of tobermorite (= white circles labelled T). Xonotlite has the chemical formula Ca6(Si6O17)(OH)2 and tobermorite has the chemical formulae Ca5Si6O16(OH)2·4H2O or Ca5Si6(O,OH)18·5H2O. The calcium silicate particles (2p) preferably have a CaO / SiO2 molar ratio comprised between 0.6 and 1.1. The calcium silicate particles are produced from lime and sand as well known to the skilled person, as described e.g., in WO99/46215.

In an advantageous implementation, the calcium silicate particles (2p) are composed of composite particles. It is not excluded that a fraction of said composite particles is broken up prior to the coating step and/or during the coating step. Such composed particles typically comprise xonotlite, tobermorite, or a mixture thereof. More preferably, the primary constituent of such composed calcium silicate particles is xonotlite. Such composed calcium silicate particles can be and are preferably synthetic calcium silicate particles. They are thus generated synthetically rather than being mined as a mineral. It is not excluded that the calcium silicate particles comprise or include recycled material, such as production waste from manufacturing calcium silicate boards.

The composite particles comprise of an inner porous structure and an external layer. The inner porous structure (2pc) is formed by inner crystals of xonotlite, or tobermorite, or a mixture thereof, which are, in one suitable embodiment, needle-like or plate like and which are entangled defining inner pores. The porous inner structure is surrounded by the external layer (2ps) forming a crystalline skin made of outer crystals of xonotlite, or tobermorite, or mixture thereof, which are - in one suitable embodiment - needle-like or plate like. The xonotlite and / or tobermorite suitable for the present invention are composed of entangled needle-like crystals, or plate-like crystals, or form composite particles, or mixtures thereof. The composite particles are illustrated in **Figures 6(a) and 6(b)** are composed of an inner porous structure (2pc) and an external layer. The inner porous structure is formed by inner crystals of xonotlite, or tobermorite, or a mixture thereof, which are in this embodiment needle-like or plate like and which are entangled defining inner pores. The porous inner structure is surrounded by an external layer (2ps) forming a crystalline skin made of outer crystals of xonotlite, or tobermorite, or mixture thereof, which are preferably needle-like or plate like, and which may be entangled defining outer pores. Preferably, the outer crystals have an average size smaller than the inner crystals and/or the outer pores have an average size smaller than the inner pores. Preferably, the outer crystals have an average size smaller than the inner crystals and/or the outer crystals are entangled defining outer pores, which the outer pores have an average size smaller than the inner pores. The composite particles themselves have been found to have a white colour and can have an L* value in the CIELAB L*a*b* colour space of at least 90, preferably at least 92.

Furthermore, the composite particles may have an average particle size in the range of 5-100µm, such as 10-90µm, or 35-85µm. **Figure 5** shows an example of particle size distribution of composite particles suitable for the present invention. The composite particles can have an average size comprised between 35 and 85 µm, preferably between 40 and 80 µm, more preferably between 50 and 75 µm. Composite particles suitable for the present invention are, for example, commercialized under the name Promaxon D. The comparatively large size of the composite particles, for instance in comparison to conventional white titanium oxide pigment, is advantageous for the application as a shading layer. This allows individual particles to remain visible and contribute to the contrast, rather than forming a layer of continuous fine material that typically appears as an opaque layer from a distance. It is not excluded that the particle size distribution is bimodal. Such bimodal distribution may be achieved, in one implementation by treatment of raw materials of the synthetic calcium silicate with sound of ultrasonic frequency. Such raw materials for synthetic calcium silicate comprise quicklime (CaO) and quartz (SiO2). After dispersing the quicklime in water at 60°C in a water/solids weight ratio of 12/1, it is treated with ultrasonic frequency in two stages, wherein the first has an effect on particle dispersion and the second on particle agglomeration. The ultrasonic frequency used for the first stage of treatment is 20.5 kHz. The ultrasonic frequency used for the second stage of treatment is around 500 kHz. Processing time is for instance 10 minutes for the first step and 5 minutes for the second step. After this ultrasonic treatment, an aqueous suspension of slaked lime comprising particles of calcium hydroxide is obtained. In one experiment, it turned out that the calcium hydroxide particles are agglomerates of crystals and are grouped into two populations of particles whose size distribution is centered around 10 and 60 microns respectively. This lime suspension is mixed with a silica suspension and is introduced into a reactor to carry out the hydrothermal synthesis in a CaO/SiO2 molar ratio of 0.96. The water/solid ratio in the reactor is 13.8. As soon as the reactor is closed, the temperature is gradually brought to 210°C in 2 hours. It is maintained at this level for 3 hours, then the reactor is cooled gradually over 4 hours to approximately 50°C. At the end of the reaction, an aqueous suspension of xonotlite comprising secondary aggregates is obtained. These aggregates have an average diameter of approximately 50 microns. They have an internal part made of xonotlite crystals oriented in three dimensions and loosely entangled, with cavities provided between the crystals. At the periphery of these aggregates, we observe a layer 4 to 6 microns thick where the crystals are finer and are intertwined much more tightly than in the central part. This layer forms a microporous wall which surrounds the internal part of the aggregates.

Besides the calcium silicate particles (2p), the aqueous dispersion (2L) can comprise dyes or additional pigments, preferably red and / or yellow pigments or dyes. The aqueous dispersion can even comprise small amounts of TiO2. Additives such as high brightness ultrafine ground calcium carbona (e.g., Imextend by Imerys) or extenders (e.g., Celtix by Imerys) to adapt the colour and reduce the overall cost of pigmentation.

The aqueous dispersion can further comprise a binder, which is preferably present in an amount of less than 25 wt.%, preferably less than 15 wt.%, more preferably less than 5 wt.%, more preferably between 0 and 2 wt.% based on the total weight of particles in the dispersion. The binder can by mineral optionally together with an organic, e.g., a polymer. If a polymer binder is used it is preferred that it would form not more than 40 wt.% of the total weight of binders (polymer + mineral), preferably not more than 25 wt.%, more preferably not more than 10 wt.%. In an embodiment, the binder comprises no polymer.

Moreover, in a preferred embodiment, the aqueous dispersion comprises a fibrous material. The presence of such fibrous material has been found to enhance the illusionary effect that the fiber cement sheet comprises fibers. Preferably, such fibrous materials that are not transparent, but rather opaque. In one implementation, the fibrous material comprises fibrils, such as fibrils marketed under the tradename SWP^{®}, which is stated to be a polyolefin synthetic wood pulp. In another implementation the fibrous material comprises pigmented fibers, for instance pigmented polyolefin fibers. The pigment of such pigmented fibers is added into the fiber material during its manufacture, such as during extrusion. The pigmented fibers for instance have a diameter of 40 to 140 dtex, preferably 50-120 dtex, such as 70-110 dtex. The polyolefin material of the fibers is for instance be polypropylene, polyethylene and/or copolymers thereof.

Exposure of the product to an outside atmosphere that includes CO2 and water may give rise to ageing and/or efflorescence of the fiber cement material. The ageing may affect the pore size distribution. Due to efflorescence, salts of the fiber cement migrate towards the surface of the material. Such salts may include silicon, calcium and/or carbonate in ionic form and dissolved into an aqueous transform such crystals into amorphous material known as calcium silicate hydrate (CSH) gel, and/or into other forms of calcium silicate with a slightly changed ratio of Calcium to Silicon. Particularly, the Calcium to Silicate ratio may increase from 1.0 (xonotlite) to above 1.0. Furthermore, carbonate may be integrated into the minerals. For instance, one form of calcium silicate that may be formed due to the presence of calcium and carbonate ions is scawtite ((Ca7(Si6O18)CO3·2H2O)), which forms flake-like crystals.

Regardless of any transformation of the xonotlite to other forms of calcium silicate, it has been found that the optical performance of a xonotlite coating on a fiber cement sheet remains rather constant over time. Tests thereto were performed with a coating that included minor amounts of pigment, such as red pigment and/or yellow pigment in addition to xonotlite. This indicates that the crystalline material of xonotlite that is entangled to create pores, is effective for distribution of the pigment throughout the coating, and that such distribution is not affected by any transformation of the calcium silicate.

### EXAMPLE 1- coating

Coating tests were performed with an aqueous coating composition comprising calcium silicate composite particles and pigment to test the behaviour of these particles when applied to a green fiber cement sheet that was subsequently cured by air-curing.

Aqueous coating compositions for imparting a light yellow-orange colour to a fibre-cement corrugated board for outdoor applications was prepared. The aqueous compositions comprised yellow pigment (Yellow 920 from Lanxess) and red pigment (Red 212 from Lanxess) and a white pigment to lighten the colour comprising (1) calcium silicate composite particles (Promaxon D) according to the present invention (= INV), and (2) TiO₂ according to the prior art (= TiO₂). The aqueous coating compositions INV and TiO₂ are defined in Table 1 below.

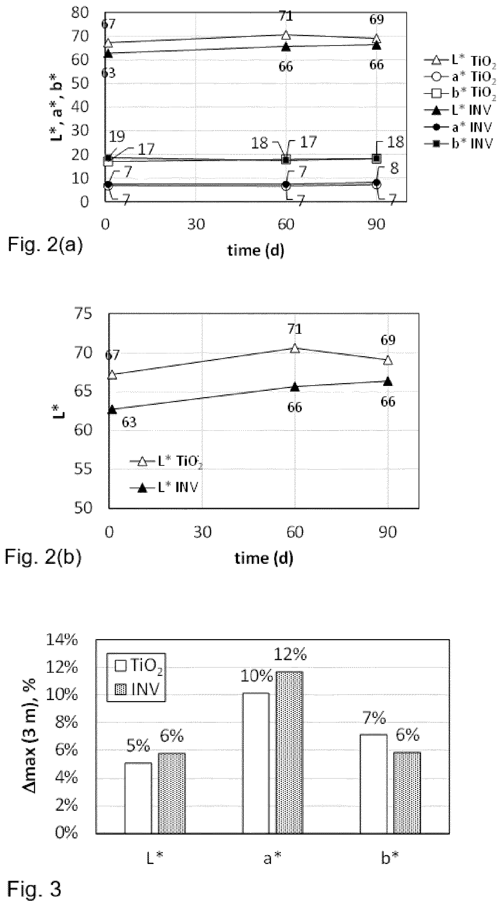

The aqueous coating compositions of Table 1 were applied onto a main surface of the green sheets by spraying, yielding a dry layer (2) of about 20 to 60 µm, preferably comprised between 25 and 50 µm, more preferably the thickness of the dry layer is 35 ± 10 µm. The green sheets were present on a conveyer belt such as shown in Fig. 2(a). Dewatering was applied in a setting station (such as shown in Fig. 2(a)) which included a vacuum box on a bottom side of the conveyer belt. All the coated sheets were thereafter stacked individually between metal templates to avoid damage of the sprayed surface, while bringing the sheets into the corrugated shape as predefined by the metal templates. The resulting products were cured by air-curing during 1 week in a ventilated oven at a temperature in the range of 30-50°C. Thereafter, the products were exposed without any protection (roof, wall, trees) to the outdoor conditions starting in November in the region of Albi (France).

**Table 1: aqueous coating compositions with xonotlite and pigment (= INV) and with TiO₂**

| | **INV** | | | **TiO₂** | | |
|---|---|---|---|---|---|---|
| **Component** | **m (g)** | **%dry** | **%wet** | **m (kg)** | **%dry** | **%wet** |
| Yellow (920) | 8 | 8% | 1% | 28 | 14% | 1% |
| Red (212) | 0.77 | 1% | 0% | 1.6 | 1% | 0% |
| Promaxon D | 97 | 92% | 10% | 0 | 0% | 0% |
| TiO₂ | 0 | 0% | 0% | 175 | 86% | 8% |
| Water | 900 | | 89% | 1878 | | 90% |
| Dry layer thickness (µm) | 35 | | | 45 | | |

The original colour of the dry sheets, i.e. without coating, had an L* value in the CIELAB L*a*b* colour space of L* = 54.1, a* = 0.39, and b* = 4.35. The L*, a*, and b* values of the coated and corrugated sheets thus coated were measured as a function of outdoor exposure time starting in November. The results for the first 60 days are plotted in Figures 2(a) and 2(b).

**Table 2 - color measurement as a function of time for dry samples**

| | **INV** | | | **TiO₂** | | |
|---|---|---|---|---|---|---|
| **Time (d)** | **L*** | **a*** | **b*** | **L*** | **a*** | **b*** |
| 1 | 62.7 | 7.3 | 18.5 | 67.2 | 6.7 | 16.9 |
| 60 | 65.6 | 7.3 | 17.5 | 70.6 | 6.6 | 17.9 |
| 90 | 66.3 | 8.1 | 18.2 | 69.0 | 7.2 | 18.1 |
| 156 | 67.5 | 9.2 | 18.4 | 70.9 | 7.4 | 19.1 |
| 216 | 67.0 | 8.5 | 18.1 | 71.7 | 7.1 | 18.8 |
| 366 | 68.6 | 7.3 | 18.0 | 72.5 | 7.3 | 19.6 |
| 542 | 69.5 | 7.5 | 18.2 | 72.1 | 6.8 | 17.9 |

As shown in Figure 2(a) and as expected, both corrugated boards coated with the coating INV and TiO₂ yield the same values for the a* = 7 and b* = 17 to 19, since these parameters representative of the red and yellow colouring of the coatings are controlled by the yellow and red pigments present in the dry layers (2). Both parameters remain very stable over exposure time for both INV- and TiO₂-coatings, with relative variations of 10 to 12% for a* (cf. Figure 3), which actually correspond to very small absolute variations, because of the small values of a*.

The L*-values obtained with the INV-coating is slightly lower than but very similar to the one obtained with the prior art TiO₂- coating, with L*¨values of 66 with the INV-coating and 70 with the TiO₂-coating. The weathering properties of both coatings are very similar and very stable with relative variations of 5 or 6% concentrated in the first two months of exposure time (cf. Figures 2(b) and 3). In the course of time, the L* values increase slightly, in a manner such that the value of the coating of the invention becomes more similar to the prior art TiO2 coating.

Table 3 shows weathering properties of both coatings as a function of time for wet samples

**Table 3 - color measurement as a function of time for wet samples**

| | | **INV** | | | **TiO₂** | |
|---|---|---|---|---|---|---|
| **Time (d)** | **L*** | **a*** | **b*** | **L*** | **a*** | **b*** |
| 1 | 57.0 | 8.3 | 18.6 | 62.5 | 6.3 | 16.7 |
| 60 | 48.2 | 9.0 | 20.9 | 61.5 | 6.7 | 18.0 |
| 90 | 48.7 | 9.6 | 21.3 | 63.1 | 8.5 | 20.0 |
| 156 | 49.8 | 10.8 | 22.0 | 63.8 | 9.1 | 20.9 |
| 216 | 49.9 | 10.4 | 21.6 | 63.7 | 9.3 | 21.0 |
| 366 | 50.9 | 9.2 | 21.8 | 63.8 | 9.6 | 21.2 |
| 542 | 51.2 | 10.2 | 22.5 | 63.2 | 9.6 | 21.1 |

The results in Table 3 indicate a quick change in color for the wet samples soon after its deposition, followed by a slow and acceptable change over time. The initial change in color may be due to structural transformation of the xonotlite material.

### EXAMPLE 2 - application of an aqueous dispersion to obtain a shading layer

Tests were performed, wherein synthetic wood pulp was taken out of the mass and replaced with a shading layer that was applied onto a surface of the green sheet. Table 4 shows compositions of the aqueous slurry used for manufacturing the green sheets, wherein the reference example comprises synthetic wood pulp. Table 5 shows compositions of the aqueous dispersion applied onto the green sheet for obtaining the shading layer. As this was a laboratory experiment, the aqueous dispersion of particulate inorganic material and/or fibrous material was applied onto a previously generated green sheet. However, in further experiments, the aqueous dispersion was applied during manufacture of the green sheet in a manner so as to be present at the first surface of the green sheet. The combination of particulate inorganic material and fibrous material is deemed most promising from decorative perspective. However, in certain implementations, the aqueous dispersion included merely fibrous material

**Table 4 - aqueous slurry compositions. All values in % based on dry weight. Synthetic wood pulp was a composition of polyolefin fibrils obtained from Mitsui under the trade name SWP^{™}. Pigment was black iron oxide pigment (Fe₃O₄).**

| | Test compositions | |
|---|---|---|
| | REF | 1-4 |
| Portland cement | 84 % | 85% |
| Cellulose fibers | 3% | 4% |
| Polyvinyl alcohol fibers | 2% | 2% |
| Synthetic wood pulp | 2% | 0% |
| Pigment | 4% | 4% |
| Trass | 5% | 5% |

**Table 5 - aqueous dispersions. All values in weight% based on total weight.**

| | Test compositions | | | | |
|---|---|---|---|---|---|
| | REF | 1 | 2 | 3 | 4 |
| Xonotlite | - | 0.2% | 0.2% | 0.2% | - |
| Synthetic wood pulp | - | - | - | 2.0% | 2.0% |
| Pigmented polypropylene fiber | - | - | 0.4% | - | - |
| Water | - | 99.8% | 99.2% | 97.8% | 98.0% |

The synthetic wood pulp is by itself an aqueous dispersion with a consistency of 4.3% by weight. The effective dry amount is thus less than 0.1%. The synthetic wood pulp is a polyethylene fibrilic composition obtained from Mitsui. The pigmented polypropylene fibers had a diameter of 110 dtex and were milled to an average length of between 1.0 and 2.0 mm, and a length distribution from 0.2 mm to 3.0 mm. The xonotlite material was synthetic xonotlite as obtained from Promat International NV under the tradename Promaxon D, having a core-shell structure as explained hereinabove and with an average diameter of approximately 50 µm. For sake of stability of the aqueous dispersion, it further included some droplets of surfactant for fiber material (a fatty acid polyglycol ether and ester mixture), and 1ml (1% by volume) of antifoam agent for concrete, being a fatty acid alcohol alkoxylate.

The green sheets were prepared using the Hatschek process on a pilot line in known manner. The aqueous dispersion was applied onto the green sheet after removal of the green sheet from the accumulator roll. In the present example, the aqueous dispersion was applied by spraying. Use was made of an air atomizing spray gun with a nozzle of 2.0 mm. The spraying was applied in lanes so as to cover the entire surface of the green sheet. Spraying was repeated five times. It is observed that the water from the dispersion quickly diffuses into the green sheet, while the particulate and fibrous material remained on top of the green sheet. Subsequently, the plates were pressed in a stack press using a pressure of 230 kg/cm². This was followed by air curing and application of a hydrophobic agent and transparent coating in the manner specified in example 1 of EP2036871A1, which is herein included by reference.

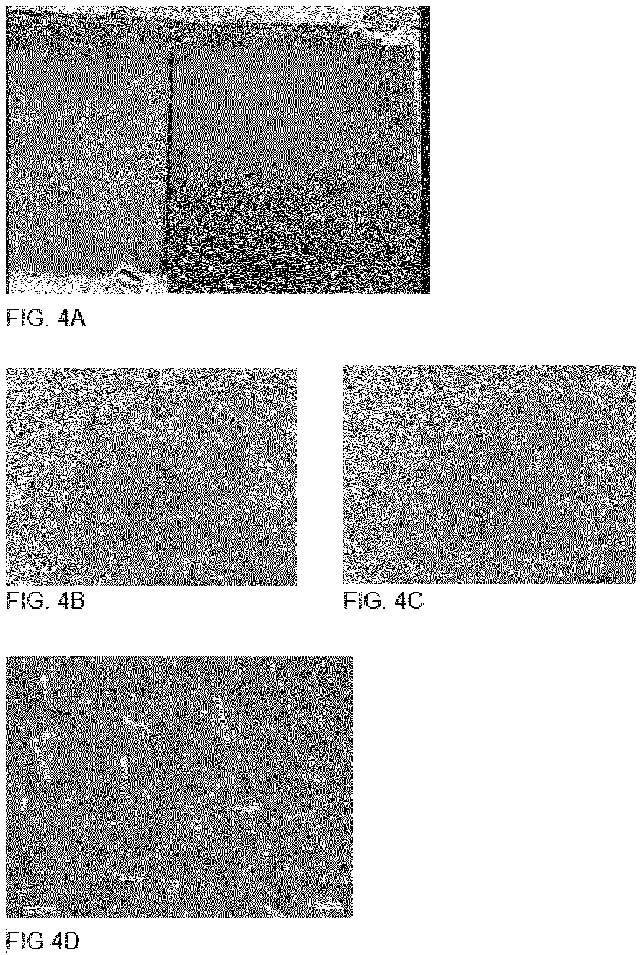

Fig. 4A-4D show a series of pictures of resulting fiber cement boards. Fig. 4A is a picture showing a board of Example 1 on the left side, and a reference board on the right side. The picture is taken before application of the coating. It is apparent, that the shading layer applied on top of the green sheet may replace the presence of synthetic wood pulp within the green sheet, so as to provide a corresponding decorative look. Fig 4B and Fig. 4C are images of the boards produced in accordance with Examples 2 and 3 respectively. These pictures were again made before coating of the sheet. It is apparent that the use of the pigmented fibers of Example 2 renders the fibrous material more visible or even dominant. However, any coating layer applied subsequently may reduce the effect, as the coating need not be fully transparent, but merely translucent. Fig. 4D shows a microscope image of the board of Example 2 after coating. The pigmented fibers are herein visible as line segments, and the xonotlite particles as dots. The indication on the bottom right-hand side specifies the length of 1 mm (1000 µm) in the image.

It was visible that the particles of inorganic material - xonotlite particles in the present example - were pressed into the green sheet. The particles remained visible as dots. None of the particles came out of the surface of the fiber cement sheet, either before curing or after curing. The particles were fully covered by the coating applied subsequently. The dots remained visible after the coating and could be distinguished from the background (with the eye and by microscope). Jointly, the dots and any fibrous material provided a shading layer, giving rise to a softening of the color of the fiber cement sheet.

In Example 2, it was visible, when looking carefully, that a few of the pigmented fibers came out of the coating, leaving a narrow groove behind. This however applied only to a minority of the pigmented fibers, and did not have an impact on the overall look of the coated fiber cement sheet. The same artefact was not seen in test samples of Example 3. Therefore, this minor artefact can be solved - if so desired - by using thinner pigmented fibers than 110 dtex or applying the coating in a larger thickness. Furthermore, by applying the fibers earlier in the process than onto the previously generated green sheet, the incorporation of fibers into the cementitious matrix of the green sheet will be better.

Color measurements were performed on the coated fiber cement sheet obtained in Example 2 and a Example 4. The color measurements were performed with a Byk-Gardner spectro-guide and an illuminant D65 and Observer 10°. There was a delay between coating and color measurement of at least one week. The color measurements were done on three different locations on the boards, each measurement being an average of three values. Table 6 shows the results. Table 7 provides an average of the three values of Table 6, as well as the difference between the two samples.

**Table 6 - color measurements**

| | L* | a* | b* |
|---|---|---|---|
| Example 4 | 29.18 | 0.59 | 0.01 |
| | 29.39 | 0.55 | 0.01 |
| | 29.05 | 0.60 | 0.16 |
| Example 2 | 31.38 | 0.53 | 0.26 |
| | 31.21 | 0.54 | 0.31 |
| | 30.92 | 0.50 | 0.33 |

**Table 7 - color measurements, calculated average and change**

| | L* | a* | b* |
|---|---|---|---|
| Example 4 -average (1) | 29.2 | 0.58 | 0.06 |
| Exam;e 2 - average (2) | 31.2 | 0.52 | 0.30 |
| Change | 2.0 | 0.06 | 0.24 |

It is apparent from Table 6 and 7 that the tested board according to the invention (Example 2) had a higher value of L*. The value for a* was virtually the same, wherein the value for b* was slightly higher. As known, the values for a* and b* depend largely on the presence of pigments, whereas the value of L* indicates the clarity (light or dark) of the sample, on a scale from 0 representing black to 100 representing pure white. Hence, in agreement with the visual observation, the test indicates that the shading layer leads to a softening of the color, i.e. the color being overall somewhat lighter.

In summary, invention provides a method of manufacturing a cementitious product comprises the steps of: (1) providing an aqueous slurry comprising cement; (2) manufacturing a green sheet having a first surface using said aqueous slurry, wherein said green sheet having a predetermined color and being provided with a shading layer comprising a particulate inorganic material and/or fibrous material at its first surface, and (3) curing said green sheet. The particulate inorganic material may for instance have an average diameter of 35-85 µm, and suitably comprises a calcium silicate material, such as xonotlite. After application of the particulate inorganic material, it may be pressed into the surface of the green sheet.

## Claims

1. A method of manufacturing a fiber cement product comprising the steps of:
- Providing an aqueous slurry comprising cement and fibers;
- Manufacturing a green sheet having a first surface using said aqueous slurry;
- Applying an aqueous dispersion comprising a particulate inorganic material and/or a fibrous material to a cementitious layer during manufacturing of the green sheet, wherein a surface of said cementitious layer will constitute the first surface of the resulting green sheet;
- Performing a pressing step, wherein at least part of the particulate inorganic material is at least partially pressed into the green sheet, and
- Curing said green sheet,
Wherein said particulate inorganic material has a mean particle size (d50) as measured by laser diffraction in the range of 20 to 100 µm, and wherein the particulate material and/or the fibrous material is applied to obtain merely partial coverage of the first surface of the green sheet.

2. The method of manufacturing as claimed in claim 1, wherein the manufacturing of the green sheet comprises forming a plurality of layers and laminating said layers on an accumulator roll, wherein the aqueous dispersion comprising particulate inorganic material is applied on a first layer prior to arranging said first layer on the accumulator roll, so that said particulate inorganic material faces an external surface of the accumulator roll.

3. The method of manufacturing as claimed in claim 2, wherein the pressing step is performed in the course of wounding and stacking the fiber cement on the accumulator roll.

4. The method of manufacturing as claimed in any of the preceding claims 1-3, wherein the particulate inorganic material comprises a particulate calcium silicate material, and preferably wherein the particulate calcium silicate material comprises xonotlite, preferably a synthetic xonotlite.

5. The method as claimed in any of the preceding claims, wherein the particulate inorganic material, preferably the particulate calcium silicate material, has a mean particle size (d50) as measured by laser diffraction in the range from 35 µm to 85 µm.

6. The method as claimed in any of the claims 1-5, wherein the fibrous material comprises at least one of pigmented fibers and fibrils.

7. The method as claimed in any of the claims 1-6, wherein the aqueous dispersion comprises both of a fibrous material and a particulate inorganic material.

8. The method of manufacturing as claimed in any of the preceding claims 1-7, wherein the shading layer is applied as an aqueous dispersion of a particulate inorganic material.

9. The method of manufacturing as claimed in any of the preceding claims 1-8, wherein the pressing step comprising compressing the green sheet with a pressure in the range of 15 MPa to 30 MPa.

10. The method of manufacturing as claimed in any of the preceding claims 1-9, wherein a coating is applied onto the cured sheet.

11. The method of manufacturing as claimed in any of the preceding claims 1-10, wherein the green sheet is manufactured using a Hatschek process or a flow-on process.

12. The method of manufacturing as claimed in any of the preceding claims, wherein discrete individual portions of the first surface get covered with the particulate inorganic material.

13. A coated fiber cement product comprising a cement sheet of predefined color and a shading layer of particulate inorganic material and/or fibrous material at a first surface of said cement sheet, which shading layer merely provides partial coverage of the first surface of the green sheet, and wherein at least part of the particulate inorganic material is at least partially pressed into the first surface, wherein said cement sheet and said shading layer are co-cured, wherein said particulate inorganic material has a mean particle size (d50) as measured by laser diffraction in the range of 20 to 100 µm and preferably in the range of 35 to 85 µm.

14. The coated cementitious product as claimed in claim 13, wherein the particles of said particulate inorganic material are pressed into the first surface.

15. The coated cementitious product as claimed in any of the preceding claims 13-14 obtainable in accordance with the method as claimed in any of the claims 1-12.
